# EUROPÄISCHE PATENTSCHRIFT

(11) **EP 3 071 942 B1**
(45) Veröffentlichungstag und Bekanntmachung des Hinweises auf die Patenterteilung: **30.12.2020**
(21) Anmeldenummer: 14781214.3
(22) Anmeldetag: 07.10.2014
(51) Int. Cl.: G01L 19/14

(54) **DRUCKSENSORANORDNUNG ZUR ERFASSUNG EINES DRUCKS EINES FLUIDEN MEDIUMS IN EINEM MESSRAUM**
PRESSURE SENSOR ARRANGEMENT FOR DETECTING A PRESSURE OF A FLUID MEDIUM IN A MEASUREMENT CHAMBER
SYSTÈME DE CAPTEUR DE PRESSION PERMETTANT DE DÉTECTER LA PRESSION D'UN MILIEU FLUIDE DANS UNE CHAMBRE DE MESURE

(30) Priorität: 18.11.2013 DE 102013223442
(43) Veröffentlichungstag der Anmeldung: 28.09.2016
(73) Patentinhaber: Robert Bosch GmbH, 70442 Stuttgart (DE)
(72) Erfinder: KAISER, Ralf, 71566 Althuette (DE); KASCHUBE, Carsten, 72622 Nuertingen (DE)
(86) Internationale Anmeldenummer: PCT/EP2014/071461
(87) Internationale Veröffentlichungsnummer: WO 2015/071028

(56) Entgegenhaltungen:
- EP-A1- 2 107 345
- EP-A2- 1 211 497
- WO-A1-2007/051779
- DE-A1-102004 062 087
- DE-A1-102006 048 072
- DE-A1-102007 026 446
- FR-A1- 2 901 876
- US-A1- 2013 056 100

## Beschreibung

### Stand der Technik

Aus dem Stand der Technik sind verschiedene Vorrichtungen und Verfahren zum Erfassen von Drücken von fluiden Medien, wie beispielsweise Gasen und Flüssigkeiten, bekannt. Die Messgröße Druck ist eine in Gasen und Flüssigkeiten auftretende, allseits wirkende, nicht gerichtete Kraftwirkung. Zur Messung der Drücke gibt es dynamisch und statisch wirkende Messwertaufnehmer bzw. Sensoren. Dynamisch wirkende Drucksensoren, dienen nur zur Messung von Druckschwingungen in gasförmigen oder flüssigen Medien. Die Druckmessung kann beispielsweise direkt, über Membranverformung oder durch einen Kraftsensor erfolgen. Insbesondere zur Messung sehr hoher Drücke wäre es grundsätzlich möglich, einen elektrischen Widerstand dem Medium auszusetzen, denn viele bekannte elektrische Widerstände zeigen eine Druckabhängigkeit. Dabei gestalten sich jedoch die Unterdrückung der gleichzeitigen Abhängigkeit der Widerstände von der Temperatur und die druckdichte Durchführung der elektrischen Anschlüsse aus dem Druckmedium heraus als schwierig.

Eine weit verbreitete Methode der Druckerfassung verwendet daher zur Signalgewinnung zunächst eine dünne Membran als mechanische Zwischenstufe, die einseitig dem Druck ausgesetzt ist und sich unter dessen Einfluss durchbiegt. Sie kann in weiten Grenzen nach Dicke und Durchmesser dem jeweiligen Druckbereich angepasst werden. Niedrige Druckmessbereiche führen zu vergleichsweise großen Membranen mit Durchbiegungen, die im Bereich von 0,1 mm bis 1 mm liegen können. Hohe Drücke erfordern jedoch dickere Membranen geringen Durchmessers, die sich meist nur wenige Mikrometer durchbiegen. Derartige Drucksensoren sind beispielsweise in Konrad Reif (Hrsg.): Sensoren im Kraftfahrzeug, 1. Auflage 2010, Seiten 80-82 und Seiten 134-136 beschrieben.

Um die Drucksensoren in oder an dem Messraum anzubringen, weisen diese üblicherweise einen Druckanschluss auf. Der Druckanschluss kann beispielsweise als Gewindestutzen ausgeführt sein und in eine Wand eines Messraums eingeschraubt werden. Der eigentliche Messwertaufnehmer bzw. das eigentliche Sensorelement ist entweder direkt oder indirekt über einen Zwischenträger an einem Gehäusesockel angeordnet. Der Gehäusesockel ist entweder integral bzw. einstückig mit dem Druckanschluss ausgebildet, wie es beispielsweise in der DE 10 2009 054 689 A1 offenbart ist, oder der Gehäusesockel und der Druckanschluss sind separate Bauteile, die mittels einer Schweißung dauerhaft miteinander verbunden werden, wie es beispielsweise in der EP 1 518 098 B1 offenbart ist. Ein weiterer Druckanschluss ist in DE 10 2006 048072 offenbart.

Das Sensorgehäuse derartiger Drucksensoren wird üblicherweise durch Schweißen, Bördeln oder Kombinationen dieser Prozesse verschlossen. Um den Innenraum und die darin enthaltene Elektronik zu schützen, werden die Gehäuseteile durch Klebungen oder Dichtringe abgedichtet.

Trotz der zahlreichen Vorteile der aus dem Stand der Technik bekannten Drucksensoranordnungen beinhalten diese noch Verbesserungspotenzial. So ist beispielsweise die einstückige Ausbildung von Gehäusesockel und Druckanschluss relativ aufwändig herzustellen. Bei der zweiteiligen Ausbildung muss hingegen in der Regel jedoch darauf geachtet werden, dass die verwendeten Materialien miteinander verschweißbar sind. Außerdem muss auf eine sehr exakte Schweißverbindung geachtet werden, da ansonsten die Stabilität der Verbindung abnimmt und diese bei entsprechender Drehmomentübertragung beim Einschrauben in die Wand des Messraums brechen kann. Auch bedingt eine derartige Ausbildung hohe Teilekosten und Verbindungsprozesskosten.

### Offenbarung der Erfindung

Es wird daher eine Drucksensoranordnung vorgeschlagen, welche die Nachteile bekannter Drucksensoren zumindest weitgehend vermeidet und die einen kostengünstigeren Sensoraufbau im Hinblick auf die Teilekosten wie auch die Verbindungsprozesskosten für die Funktion der Momentübertragung zum Einschrauben der Drucksensoranordnung in den Messraum und eine dichte Verbindung zwischen dem Druckanschluss und dem Sensorgehäuse ermöglicht. Die Erfindung ist grundsätzlich zum Erfassen eines Drucks an jedem Einsatzort geeignet, insbesondere im Bereich, der in einem Kraftfahrzeug zu messenden Drücke, insbesondere der Hochdrücke, wie sie beispielsweise in einem "Common-Rail" vorherrschen.

Die vorgeschlagene Drucksensoranordnung dient der Erfassung eines Drucks eines fluiden Mediums in einem Messraum. Der Druck kann grundsätzlich als Absolutdruck und/oder auch als Differenzdruck erfasst werden. Daneben können bei entsprechender Integration jeweiliger Bauteile ein oder mehrere weitere physikalische und/oder chemische Eigenschaften des fluiden Mediums bestimmt werden, einschließlich beispielsweise einer Temperatur, eines weiteren Drucks, einer Strömungseigenschaft oder einer oder mehrerer anderer Eigenschaften. Bei dem Messraum kann es sich grundsätzlich um einen beliebigen Raum handeln, in welchem das fluide Medium, also ein Gas und/oder eine Flüssigkeit, ruhend oder strömend aufgenommen ist. Insbesondere kann es sich bei dem Messraum um einen Teil eines Kraftstoffsystems handeln. Die Drucksensoranordnung kann somit insbesondere zur Erfassung eines Kraftstoffdrucks eingesetzt werden oder ausgestaltet sein.

Eine erfindungsgemäße Drucksensoranordnung zur Erfassung eines Drucks eines fluiden Mediums in einem Messraum wird in den anhängigen Ansprüchen offenbart und umfasst ein Sensorgehäuse, mindestens ein Sensorelement, dass so in oder an dem Sensorgehäuse angeordnet ist, dass es zum Messen eines Drucks des Mediums dem Medium aussetzbar ist, einen Druckanschluss, mittels dessen die Sensoranordnung an oder in dem Messraum anbringbar ist, und einen Gehäusesockel, auf dem das Sensorgehäuse angeordnet ist. Der Gehäusesockel ist als Blech ausgebildet. Der Gehäusesockel weist zum Befestigen des Sensorgehäuses an dem Gehäusesockel mindestens ein elastisch verformbares Halteelement auf.

Beispielsweise ist das Halteelement als elastisch verformbare Lasche ausgebildet. Das Sensorgehäuse weist mindestens eine Vertiefung auf, wobei das Halteelement in die Vertiefung eingreift. Das Eingreifen bewirkt das Befestigen des Sensorgehäuses an dem Gehäusesockel. Das Halteelement kann zumindest in einer Richtung von dem Sensorgehäuse weg verformbar sein. Der Gehäusesockel kann einen druckanschlussseitigen Abschnitt und einen sensorgehäuseseitigen Abschnitt aufweisen, wobei der sensorgehäuseseitige Abschnitt eine Außenseite des Sensorgehäuses zumindest abschnittsweise umgibt. Der sensorgehäuseseitige Abschnitt kann koaxial zu der Außenseite des Sensorgehäuses angeordnet sein. Der sensorgehäuseseitige Abschnitt kann im Wesentlichen senkrecht zu dem druckanschlussseitigen Abschnitt angeordnet sein. Das Halteelement kann an dem sensorgehäuseseitigen Abschnitt angeordnet sein. Das Halteelement kann sich in Richtung zu dem druckanschlussseitigen Abschnitt erstrecken. Zwischen dem Sensorgehäuse und dem Gehäusesockel kann eine Dichtung vorgesehen sein.

Unter einem Druckstutzen ist im Rahmen der vorliegenden Erfindung ein Ansatz- oder Rohrstück mit mindestens einer Bohrung zu verstehen, durch welche das fluide Medium zu dem Sensorelement geleitet werden kann, beispielsweise eine zylindrische Bohrung in einem zylindrischen Stutzen. Der Druckstutzen kann als druckbeständiger Stutzen ausgebildet sein, um beispielsweise durch die in einer Kraftstoffleitung auftretenden Hochdrücke nicht beschädigt zu werden.

Unter einem Blech ist im Rahmen der vorliegenden Erfindung ein dünnes, sich in flächenhafter Ausdehnung erstreckendes Bauteil aus einem schweißbaren Material zu verstehen.

Ein Grundgedanke der vorliegenden Erfindung ist, auf den Druckanschluss ein dünnes und kostengünstiges Sechskanttiefziehblech mit Versteifungsrippen aufzuschweißen. Das Sechskanttiefziehblech wird mit mindestens einer und bevorzugt mehreren Laschen, wie beispielsweise sechs Laschen, an den Schlüsselflächen versehen. An dem Sensorgehäuse werden an den jeweiligen Sechskantstirnflächen ebenfalls sechs Vertiefungen mit eingespritzt. Des Weiteren wird ein elastischer Dichtring in das Sensorgehäuse eingelegt oder als Zweikomponentenspritzring an das Sensorgehäuse mit angespritzt. Bei der Montage wird nun das Sensorgehäuse in das Sechskanttiefziehblech eingeschoben. Dabei werden die Laschen elastisch verdrängt. Sobald das Sensorgehäuse auf den Dichtring trifft, greifen die Laschen in die Vertiefungen des Sensorgehäuses ein und verbinden beide Partner fest miteinander. Die verbleibende elastische Kraft des Dichtrings sorgt für die Dichtheit und gleichzeitig für die mechanische Vorspannung zwischen Sensorgehäuse und Sechskanttiefziehblech. Ein aufwändiger Schweißprozess oder Ähnliches entfällt dadurch.

Die in dem Tiefziehsechskant integrierten Laschen bilden eine dauerhafte feste Verbindung mit dem Sensorgehäuse. Dadurch kann das bisher aufwändig ins Sensorgehäuse eingespritzte Tiefziehformteil entfallen. Der bisher notwendige Verbindungsschweißprozess vom Sechskant mit dem Sensortiefziehgehäuse entfällt und wird durch ein einfaches Fügen ersetzt. Die Dichtung des Elektronikraumes kann kostengünstig im selben Fügeprozess erfolgen. Es wird ein Tiefziehsechskant erstellt der eine Gewichts- sowie Kostenersparnis gegenüber dem bisherigen massiven Sechskant darstellt.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen
- Figur 1: eine Schnittansicht einer erfindungsgemäßen Drucksensoranordnung,
- Figur 2: eine vergrößerte Schnittansicht eines Ausschnitts des Gehäusesockels,
- Figur 3: eine Seitenansicht des Gehäusesockels,
- Figur 4: eine vergrößerte Schnittansicht eines Ausschnitts des Sensorgehäuses und
- Figur 5: eine Seitenansicht des Sensorgehäuses.

### Ausführungsformen der Erfindung

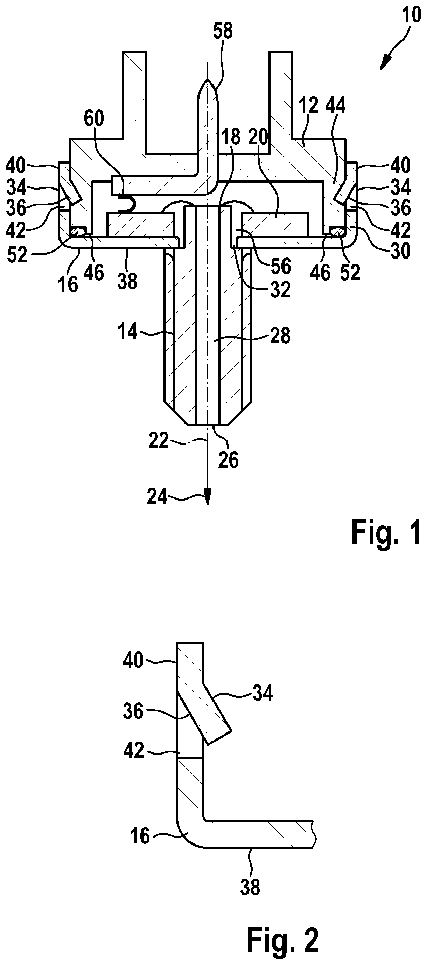

In Figur 1 ist eine Querschnittsansicht einer beispielhaften Ausführungsform einer erfindungsgemäßen Drucksensoranordnung 10 gezeigt. Die Drucksensoranordnung 10 kann beispielsweise zum Erfassen eines Drucks von Kraftstoff in einer Kraftstoffleitung eines Verbrennungsmotors ausgebildet sein. Die Drucksensoranordnung 10 umfasst ein Sensorgehäuse 12, einen Druckanschluss 14, einen Gehäusesockel 16 und ein Sensorelement 18. Eine Leiterplatte 20 mit einer nicht näher gezeigten Auswerteschaltung, die eingerichtet ist, ein Signal auszugeben, das einen auf das Sensorelement 18 wirkenden Druck anzeigt, ist an dem Gehäusesockel 16 angebracht, beispielsweise verklebt.

Der Druckanschluss 14 kann aus Metall sein und kann als zylindrischer Druckstutzen, insbesondere als Gewindestutzen, ausgebildet sein, dessen Zylinderachse 22 mit einer Längserstreckungsrichtung 24 der Drucksensoranordnung 10 zusammenfällt. Der Druckanschluss 14 weist an einem Ende eine Öffnung 26 für das zu messende druckbeaufschlagte Medium auf, das sich in einem nicht näher gezeigten Messraum, wie beispielsweise einer Kraftstoffleitung, befindet. Bei einer Ausführung des Druckanschlusses 14 als Gewindestutzen kann dieser ein Außengewinde aufweisen, das dazu dient, den Druckanschluss 14 an oder in einer Wand des Messraums zu befestigen, wobei das Außengewinde in ein passend geformtes Innengewinde der Wand des Messraums greift.

Das Sensorelement 18 kann mit dem Druckanschluss 14 integral mit diesem ausgebildet sein, wie in Figur 1 gezeigt ist. Alternativ kann das Sensorelement 18 mit dem Druckanschluss 14 mittels einer Schweißverbindung verbunden. In seinem Inneren weist der Druckanschluss 14 einen sich an die Öffnung 26 anschließenden Kanal 28 auf. Der Kanal 28 erstreckt sich koaxial zu der Zylinderachse 22 des Druckanschlusses 14 und der Längserstreckungsrichtung 24 der Drucksensoranordnung 10. Durch den Kanal 28 gelangt das Medium von der Öffnung 26 ausgehend zu dem Sensorelement 18.

Der Gehäusesockel 16 ist als Blech 30 ausgebildet. Beispielsweise ist der Gehäusesockel 16 als Metallblech ausgebildet und mit dem Druckanschluss 14 verschweißt. Insbesondere ist der Gehäusesockel 16 als Sechskant und genauer als Tiefziehsechskant ausgebildet, wie nachstehend noch ausführlicher erläutert wird. Das Blech 30 weist in seiner Mitte eine Öffnung 32 auf, deren Mittelpunkt auf der Zylinderachse 22 des Druckanschlusses 14 liegen kann und das Blech 30 vollständig parallel zu der Längsachse 22 des Druckanschlusses 14 in Richtung zu dem Sensorgehäuse 12 durchdringen kann. Die Öffnung 32 kann zu diesem Zweck als Durchgangsloch ausgebildet sein. Beispielsweise liegt das Blech 30 so teilweise auf dem Druckanschluss 14 auf, dass das Sensorelement 18 die Öffnung 32 durchdringt und von dem Blech 30 in Richtung zu dem Sensorgehäuse 12 vorsteht.

Figur 2 zeigt eine vergrößerte Schnittansicht eines Ausschnitts des Gehäusesockels 16. Dargestellt ist ein bezogen auf die Zylinderachse 22 des Druckanschlusses 14 radial äußerer Teil des Gehäusesockels 16. Der Gehäusesockel 16 weist mindestens ein elastisch verformbares Halteelement 34 auf. Das Halteelement 34 kann als elastisch verformbare Lasche 36 ausgebildet sein. Der Gehäusesockel 16 weist einen druckanschlussseitigen Abschnitt 38 auf, der an dem Druckanschluss 14 befestigt ist, und einen sensorgehäuseseitigen Abschnitt 40. Der sensorgehäuseseitige Abschnitt erstreckt sich im Wesentlichen senkrecht zu dem druckanschlussseitigen Abschnitt 38. Das Halteelement 34 ist an dem sensorgehäuseseitigen Abschnitt 40 angeordnet. Das Halteelement 34 erstreckt sich dabei in Richtung zu dem druckanschlussseitigen Abschnitt 38. Die Lasche 36 ist dabei elastisch in einer Richtung von dem Sensorgehäuse 12 weg verformbar, wie nachstehend noch ausführlicher beschrieben wird. Beispielsweise weist der sensorgehäuseseitige Abschnitt 40 eine Aussparung 42 auf, in die die Lasche 36 von der Zylinderachse 22 des Druckanschlusses 14 weg gedrückt werden kann.

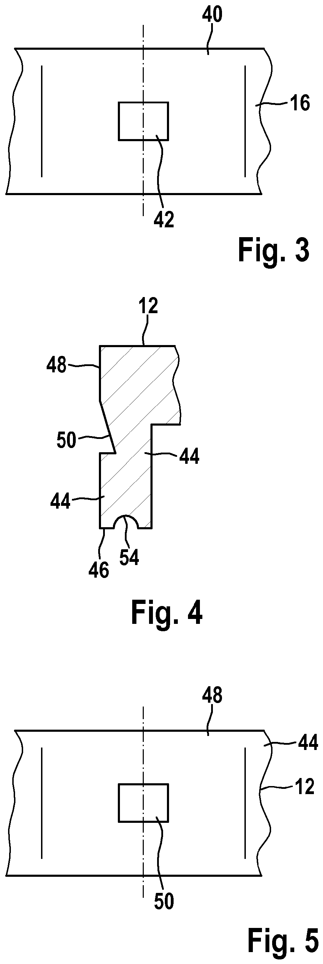

Figur 3 zeigt eine Seitenansicht des Gehäusesockels 16 im Bereich des sensorgehäuseseitigen Abschnitts 40. Gut zu erkennen ist die Aussparung 42. Die Lasche 36 kann rechteckig in einer Seitenansicht gesehen ausgebildet sein. Die Aussparung 42 weist eine entsprechende Form auf und ist somit ebenfalls rechteckig ausgebildet.

Figur 4 zeigt eine vergrößerte Schnittansicht eines Ausschnitts des Sensorgehäuses 12. Das Sensorgehäuse 12 weist in einem dem Gehäusesockel 16 zugewandten Bereich einen annähernd umgekehrt U-förmigen Querschnitt auf. Das Sensorgehäuse 12 weist einen Wandabschnitt 44 auf, der dem Gehäusesockel 16 zugewandt ist. Der Wandabschnitt 44 des Sensorgehäuses 12 weist dabei eine Stirnseite 46 und eine Außenseite 48 auf. Die Stirnseite 46 ist dem druckanschlussseitigen Abschnitt 38 des Gehäusesockels 16 zugewandt und die Außenseite 48 ist dem sensorgehäuseseitigen Abschnitt 40 des Gehäusesockels 16 zugewandt. Das Sensorgehäuse 12 weist mindestens eine Vertiefung 50 auf. Die Vertiefung 50 ist in der Außenseite 48 ausgebildet. Das Halteelement 34 greift in die Vertiefung 50 ein, wie in Figur 1 dargestellt ist. Es versteht sich, dass für jedes Halteelement 34 eine passende Vertiefung 50 vorgesehen ist.

Figur 5 zeigt eine Seitenansicht des Sensorgehäuses 12 im Bereich der Außenseite 48 des Wandabschnitts 44. Gut zu erkennen ist die Vertiefung 50, in die die Lasche 36 eingreifen kann. Die Vertiefung 50 ist in der Seitenansicht der Figur 5 gesehen rechteckig ausgebildet. Dabei nimmt die Tiefe der Vertiefung 50 in Richtung zu der Stirnseite 46 hin zu.

Wie in Figur 1 gezeigt, umgibt der sensorgehäuseseitigen Abschnitt 40 den Wandabschnitt 44 außen an der Außenseite 48 des Sensorgehäuses 12 zumindest abschnittsweise. Insbesondere ist der sensorgehäuseseitige Abschnitt 40 koaxial zu der Außenseite 48 des Sensorgehäuses 12 angeordnet. Zwischen dem Sensorgehäuse 12 und dem Gehäusesockel 16 kann eine Dichtung 52 vorgesehen sein. Die Dichtung 52 kann als O-Ring ausgebildet sein. Beispielsweise weist der Wandabschnitt 44 in der Stirnseite 46 eine Vertiefung 54 zur Aufnahme der Dichtung 52 auf.

Das Sensorelement 18 befindet sich im montierten Zustand im Inneren des Sensorgehäuses 12. Das Sensorelement 18 ist insbesondere so in oder an dem Sensorgehäuse 12 angeordnet, dass es zum Messen des Drucks des Mediums dem Medium aussetzbar ist. Dies kann dadurch realisiert werden, dass das Medium durch die Öffnung 26 und den Kanal 28 in den Druckanschluss 14 zu dem Sensorelement 18 gelangen kann. Im Inneren des Sensorgehäuses 12 befindet sich auch die Leiterplatte 20. Das Sensorelement 18 durchragt die Leiterplatte 20, indem es durch eine entsprechende Öffnung 56 der Leiterplatte 20 hindurchgeführt wird. Die Leiterplatte 20 ist somit koaxial zu dem Sensorelement 18 angeordnet. Die Auswerteschaltung auf der Leiterplatte 20 ist somit außerhalb des Mediums mediendicht angeordnet. Das Sensorelement 18 kann beispielsweise als Druckmesszelle aus Edelstahl ausgebildet sein, die auf der dem Medium abgewandten Seite Widerstände in Dünnschichttechnik aufweist. Diese können zu wheatstoneschen Brücken geschaltet sein, deren Widerstand sich aufgrund des angelegten Drucks ändert. Die Aufbereitung und Signalverstärkung des Drucksignals erfolgt mittels der nicht näher gezeigten Auswerteschaltung auf der Leiterplatte 20, die in Form einer anwendungsspezifischen integrierten Schaltung, englisch: application specific integrated circuit (ASIC), auch Custom Chip genannt, oder durch einen Hybrid realisiert sein kann. Ein ASIC ist eine elektronische Schaltung, die als integrierter Schaltkreis realisiert wurde. Die Funktion eines ASICs ist damit nicht mehr manipulierbar. Die Kontaktierung der Druckmesszelle zur Auswerteschaltung auf der Leiterplatte 20 kann entweder über eine an den elektrischen Kontaktflächen angelötete oder aufgeklebte Flexfolie oder über einen zusätzlichen Zwischenträger (Spacer) realisiert werden. Der Zwischenträger wird dabei mithilfe von Bondverbindungen mit der Druckmesszelle kontaktiert. Die auf dem Zwischenträger platzierte Auswerteschaltung wird beispielsweise verlötet.

Die Kontaktierung der Auswerteschaltung auf der Leiterplatte 20 in einem nicht gezeigten Gerätestecker, der in das dem Gehäusesockel 16 abgewandte Ende des Sensorgehäuses 12 eingeführt und eingesteckt wird, erfolgt entweder über angelötete flexible Leitungen oder direkt über Steckerpins 58, die im Übergang vom Sensorgehäuse 12 zum Gerätestecker durch Weichgummi, der im Inneren des Sensorgehäuses 12 angeordnet sein kann, abgedichtet werden. Eine weitere Möglichkeit zur elektrischen Kontaktierung besteht durch eine Schraubenfeder oder eine S-förmige Blattfeder 60, die eine einfache automatisierte Montage des Gerätesteckers ermöglicht.

Wie oben erwähnt, ist der Gehäusesockel 16 als Sechskanttiefziehblech ausgebildet und mit sechs Laschen 36 an den Schlüsselflächen ausgebildet. Bei der Montage der Drucksensoranordnung 10 wird nun das Blech 30 auf den Druckanschluss 14 geschweißt und gegebenenfalls mit nicht näher gezeigten Versteifungsrippen verstärkt, die sich von dem sensorgehäuseseitigen Abschnitt 40 zu dem druckanschlussseitigen Abschnitt 38 erstrecken und diese gegenseitig abstützen.. Das Sensorgehäuse 12 wird mit den beschriebenen sechs Vertiefungen 50 ausgebildet, beispielsweise mittels Spritzgusstechnik. Dann wird eine Dichtung 52 in die Vertiefung 54 in der Stirnseite 46 des Wandabschnitts 44 des Sensorgehäuses 12 eingelegt. Alternativ kann die Dichtung 52 als so genannter Zweikomponentenspritzring mit an das Sensorgehäuse 12 angespritzt werden. Bei der Montage wird nun das Sensorgehäuse 12 in den Gehäusesockel 16 eingeschoben. Dabei werden die Laschen 36 von dem Wandabschnitt 44 elastisch in die Aussparungen 42 nach außen von dem Sensorgehäuse 12 weg verdrängt bzw. gedrückt. Sobald das Sensorgehäuse 12 und der Gehäusesockel 16 gemeinsam die Dichtung 52 berühren, bewegen sich die Laschen 36 auf Grund ihrer elastischen Vorspannung aus den Aussparungen 42 wieder in ihre Ausgangsstellung zurück in Richtung zu dem Sensorgehäuse 12 hin. Schließlich greifen die Laschen 36 in die Vertiefungen 50 des Sensorgehäuses 12 ein und verbinden beide Bauteile fest miteinander. Die verbleibende elastische Kraft der Dichtungen 52 sorgt für die Dichtheit und gleichzeitig für die mechanische Vorspannung zwischen Sensorgehäuse 12 und dem Gehäusesockel 16. Ein aufwändiger Schweißprozess oder Ähnliches entfällt auf Grund dieser rein mechanischen Verbindung.

## Patentansprüche

1. Drucksensoranordnung (10) zur Erfassung eines Drucks eines fluiden Mediums in einem Messraum, umfassend ein Sensorgehäuse (12), mindestens ein Sensorelement (18), das so in oder an dem Sensorgehäuse (12) angeordnet ist, dass es zum Messen eines Drucks des Mediums dem Medium aussetzbar ist, einen Druckanschluss (14), mittels dessen die Drucksensoranordnung (10) an oder in dem Messraum anbringbar ist, und einen Gehäusesockel (16), auf dem das Sensorgehäuse (12) angeordnet ist,
wobei der Gehäusesockel (16) zum Befestigen des Sensorgehäuses (12) an dem Gehäusesockel (16) mindestens ein elastisch verformbares Halteelement (34) aufweist, wobei das Sensorgehäuse (12) mindestens eine Vertiefung (50) aufweist, wobei das Haltelement (34) in die Vertiefung (50) eingreift, wobei der Gehäusesockel (16) einen druckanschlussseitigen Abschnitt (38) und einen sensorgehäuseseitigen Abschnitt (40) aufweist, wobei der sensorgehäuseseitige Abschnitt (40) eine Außenseite (48) des Sensorgehäuses (12) zumindest abschnittsweise umgibt, wobei der sensorgehäuseseitige Abschnitt (40) koaxial zu der Außenseite (48) des Sensorgehäuses (12) angeordnet ist, wobei das Halteelement (34) an dem sensorgehäuseseitigen Abschnitt (40) angeordnet ist,
**dadurch gekennzeichnet, dass**
der Druckanschluss (14) ein Außengewinde aufweist, der Gehäusesockel (16) als Metallblech (30) ausgebildet und mit dem Druckanschluss (14) verschweißt ist, das Halteelement (34) als elastisch verformbare Lasche (36) ausgebildet ist, wobei sich das Halteelement (34) in Richtung zu dem druckanschlussseitigen Abschnitt (38) erstreckt.

2. Drucksensoranordnung (10) nach dem vorhergehenden Anspruch, wobei das Haltelement (34) zumindest in einer Richtung von dem Sensorgehäuse (12) weg verformbar ist.

3. Drucksensoranordnung (10) nach einem der vorhergehenden Ansprüche, wobei der sensorgehäuseseitige Abschnitt (40) im Wesentlichen senkrecht zu dem druckanschlussseitigen Abschnitt (38) angeordnet ist.

4. Drucksensoranordnung (10) nach einem der vorhergehenden Ansprüche, wobei zwischen dem Sensorgehäuse (12) und dem Gehäusesockel (16) eine Dichtung (54) vorgesehen ist.

## Claims

1. Pressure sensor arrangement (10) for detecting a pressure of a fluid medium in a measurement chamber, comprising a sensor housing (12), at least one sensor element (18) which is arranged in or on the sensor housing (12) in such a way that it can be subjected to the medium in order to measure a pressure of the medium, a pressure connection (14) by means of which the pressure sensor arrangement (10) can be mounted on or in the measurement chamber, and a housing base (16) on which the sensor housing (12) is arranged,
wherein the housing base (16) has at least one elastically deformable securing element (34) for attaching the sensor housing (12) to the housing base (16), wherein the sensor housing (12) has at least one depression (50), wherein the securing element (34) engages in the depression (50), wherein the housing base (16) has a pressure-connection-side section (38) and a sensor-housing-side section (40), wherein the sensor-housing-side section (40) at least partially surrounds an outer side (48) of the sensor housing (12), wherein the sensor-housing-side section (40) is arranged coaxially with respect to the outer side (48) of the sensor housing (12), wherein the securing element (34) is arranged on the sensor-housing-side section (40),
**characterized in that**
the pressure connection (14) has an outer thread, the housing base (16) is embodied as a metal plate (30) and is welded to the pressure connection (14), and the securing element (34) is embodied as an elastically deformable clip (36), wherein the securing element (34) extends in the direction of the pressure-connection-side section (38).

2. Pressure sensor arrangement (10) according to the preceding claim, wherein the securing element (34) can be deformed away from the sensor housing (12) at least in one direction.

3. Pressure sensor arrangement (10) according to either of the preceding claims, wherein the sensor-housing-side section (40) is arranged essentially perpendicularly with respect to the pressure-connection-side section (38).

4. Pressure sensor arrangement (10) according to one of the preceding claims, wherein a seal (54) is provided between the sensor housing (12) and the housing base (16).

## Revendications

1. Ensemble formant capteur de pression (10) destiné à détecter une pression d'un milieu fluide dans un espace de mesure et comprenant un boîtier de capteur (12), au moins un élément capteur (18) qui est disposé dans ou sur le boîtier de capteur (12) de telle sorte qu'il peut être exposé au milieu pour mesurer la pression du milieu, un raccord de pression (14) au moyen duquel l'ensemble formant capteur de pression (10) peut être fixé sur ou dans l'espace de mesure, et une base de boîtier (16) sur laquelle le boîtier de capteur (12) est disposé,
la base de boîtier (16) comportant au moins un élément de retenue (34) déformable élastiquement destiné à fixer le boîtier de capteur (12) à la base de boîtier (16), le boîtier de capteur (12) comportant au moins un évidement (50), l'élément de retenue (34) s'engageant dans l'évidement (50), la base de boîtier (16) comportant une portion côté raccord de pression (38) et une portion côté boîtier de capteur (40), la portion côté boîtier de capteur (40) entourant un extérieur (48) du boîtier de capteur (12) au moins par portions, la portion côté boîtier de capteur (40) étant disposée coaxialement au côté extérieur (48) du boîtier de capteur (12), l'élément de retenue (34) étant disposé sur la portion côté boîtier de capteur (40),
**caractérisé en ce que**
le raccord de pression (14) comporte un filetage extérieur, la base de boîtier (16) est réalisée sous la forme d'une tôle métallique (30) et est soudée au raccord de pression (14), l'élément de retenue (34) est réalisé sous la forme d'une patte (36) déformable élastiquement, l'élément de retenue (34) s'étendant en direction de la portion côté raccord de pression (38).

2. Ensemble formant capteur de pression (10) selon la revendication précédente, l'élément de retenue (34) étant déformable au moins dans une direction opposée au boîtier de capteur (12).

3. Ensemble formant capteur de pression (10) selon l'une des revendications précédentes, la portion côté boîtier de capteur (40) étant disposée sensiblement perpendiculairement à la portion côté raccord de pression (38).

4. Ensemble formant capteur de pression (10) selon l'une des revendications précédentes, une garniture d'étanchéité (54) étant prévue entre le boîtier de capteur (12) et la base de boîtier (16).
